# EUROPEAN PATENT APPLICATION

(11) **EP 2 187 404 A1**
(43) Date of publication of application: **19.05.2010**
(21) Application number: 09014355.3
(22) Date of filing: 17.11.2009
(51) Int. Cl.: H01B 1/20, C08J 5/18, C08K 3/22, C08K 9/08

(54) **Thermally conductive sheet and method of producing the same**

(30) Priority: 17.11.2008 JP 2008293038
(71) Applicant: Nitto Denko Corporation, Ibaraki-shi, Osaka 567-8680 (JP)
(72) Inventor: Hirano, Keisuke, Ibaraki-shi Osaka 567-8680 (JP)
(74) Representative: Stolmár, Matthias

(57) **Abstract**

An object of the present invention is to provide a thermally conductive sheet having an improved electrical insulating property and a method of producing the same. A thermally conductive sheet includes a resin composition that contains a silicone resin and inorganic particles, wherein the inorganic particles include metal oxide particles that have a particle diameter of 1-100 nm and are dispersed in the silicone resin while being chemically bonded to the silicone resin.

## Description

### CROSS REFERENCE TO RELATED APPLICATION

This application claims priority from Japanese Patent Application No. 2008-293038, which is incorporated herein by reference.

### BACKGROUND OF THE INVENTION

### 1. Field of the Invention

The present invention relates to a thermally conductive sheet formed into a sheet by a resin composition that includes a silicone resin and inorganic particles dispersed in the silicone resin, and a method of producing a thermally conductive sheet that involves a resin composition preparation step of preparing a resin composition that includes a silicone resin and inorganic particles dispersed in the silicone resin and a sheet forming step of forming the resin composition prepared at the resin composition preparation step into sheet.

### 2. Description of the Related Art

In recent years, there is a demand for an efficient cooling technique in order to deal with the circumstances in which, along with high density packaging and interconnection of electronics devices for the purposes of realizing small size and low profile of the electronics devices, heat elements are required to be packed closely.
Generally, heat generated by an electronics device is released into the atmosphere, and the releasing of heat is made by mounting a radiator made of aluminium, copper or other metals to the electronics device.
In the above attachment of the radiator, an air layer, which may be formed on a contact interface between the electronics device and the radiator, makes it difficult to achieve efficient heat transfer. In order to deal with this, it is widely employed to make the electronics device contact to the radiator via silicone grease or interpose a sheet having an excellent thermal conductive property (hereinafter referred to as a thermally conductive sheet) therebetween. Especially, the thermally conductive sheet is widely used because it is easy to be handled.

This thermally conductive sheet is formed by usually a resin composition with inorganic particles having a high thermal conductive property dispersed in a resin that acts as a matrix, such as a silicone resin or an epoxy resin, and an attempt was made to increase thermal conductive property by adjusting the kind, the blending amount, or the like of inorganic particles to be used.

The thermally conductive sheet is required in general to have not only thermal conductive property, but also electrical insulating property for shutting off electrical current from an electrical device to a radiator.
Accordingly, metal particles or the like, which are effective in improving thermal conductive property but lower electrical insulating property, are not used as inorganic particles of the resin composition, while particles of metal oxide or metal nitride are used as inorganic particles of the resin composition.
Among them, particles of silicon carbide, boron nitride, aluminum nitride, silicon nitride, gallium nitride, aluminum oxide or silicon oxide are widely used because they exhibit a high thermal conductive property.

Meanwhile, these inorganic particles are generally low in affinity for resin.
Because of this, a thermally conductive sheet is easy to generate an air void in an interface between the resin and the inorganic particles, and tends to easily lower electrical insulating property by itself when a large amount of inorganic particles are contained to improve thermal conductive property.
In order to deal with this, in the following Patent Document 1 and Patent Document 2, a study is made to improve the affinity between the resin and the inorganic particles by adding a surface active agent or coupling agent.
However, a low molecular weight component, such as the surface active agent or coupling agent, which has polarity, is easy to lower electrical insulating property, and therefore there is a fear that the addition of them to such an extent to satisfactorily improve the affinity between the resin and the inorganic particle causes lowering of the electrical insulating property of a thus formed thermally conductive sheet.

For the above reason, these methods do not exhibit an effect sufficient to improve the electrical insulating property, causing a difficulty in producing a thermally conductive sheet having an excellent electrical insulating property.

Patent Document 1: Japanese Patent Application Laid-open No. Hei-10-60161
Patent Document 2: Japanese Patent Application Laid-open No. 2001-348488

### SUMMARY OF THE INVENTION

It is an object of the present invention to provide a thermally conductive sheet having an improved electrical insulating property and a method of producing the same.

The present inventors found that addition of metal oxide fine particles in a resin composition enables the metal oxide particles to effectively act on trapping of electric charge to improve electrical insulating property.
Then, the present inventors found that improving the affinity between such metal oxide fine particles and the resin can in turn improve the electric insulating property of the thermally conductive sheet, and hence accomplished the present invention.

According to one aspect of the present invention, there is provided a thermally conductive sheet including a resin composition that contains a silicone resin and inorganic particles, wherein the inorganic particles include metal oxide particles that have a particle diameter of 1-100 nm and are dispersed in the silicone resin while being chemically bonded to the silicone resin.

According to another aspect of the present invention, there is provided a method of producing a thermally conductive sheet including a resin composition preparation step of preparing a resin composition that contains a silicone resin and inorganic particles dispersed in the silicone resin, and a sheet forming step of forming the resin composition prepared in the resin composition preparation step into sheet, wherein in the resin composition preparation step, inorganic particles including metal oxide particles having a particle diameter of 1-100 nm are dispersed in the silicone resin while allowing the metal oxide particles to be chemically bonded to the silicone resin, thereby preparing the resin composition.

In the present invention, a resin composition, which forms a thermally conductive sheet, includes a silicone resin and metal oxide particles having a particle diameter of 1-100 nm. Thus, the metal oxide particles of the thermally conductive sheet can exhibit the function of trapping electric charge, thereby enabling achievement of an improved insulating property.
Also, the chemical bonding of the metal oxide particles with the silicone resin suppress the formation of air void in an interface between the silicone resin and the metal oxide particles.
That is, the thermally conductive sheet of the present invention can improve its electric insulating property as compared with a conventional thermally conductive sheet.
According to the method of producing the thermally conductive sheet of the present invention, a thermally conductive sheet having an excellent electric insulating property can be formed.

### DESCRIPTION OF THE PREFERRED EMBODIMENTS

Now, the description will be made for an embodiment of the present invention.
A thermally conductive sheet of the present invention includes a resin composition formed into sheet, the resin composition containing a resin component and an inorganic component, and specifically containing a silicone resin as the resin component.
Also, the resin composition contains metal oxide particles (hereinafter referred also to as "metal oxide fine particles") having a particle diameter of 1-100 nm, and inorganic particles other than the metal oxide fine particles.
The metal oxide fine particles are contained in the silicone resin while being chemically bonded to the silicone resin.

For the silicone resin of the present invention, any silicone resins may be used, provided that they can be chemically bonded to the metal oxide fine particles, while it can be cited a silicone resin having a reactive functional group that is reacted with a hydroxyl group generally existing on the surface of the metal oxide fine particles, such as a silicone resin having a silanol group in a molecule thereof.
The silanol group can be easily formed by hydrolyzing an alkoxysilyl group.
Therefore, for example, the silicone resin is not required to originally have a silanol group, and may originally have an alkoxysilyl group, which is later changed to a silanol group.
With respect to this, more detailed description will be made as follows, in which a chemical bond can be formed between a silicone resin and metal oxide fine particles.

Since the alkoxysilyl group is hydrolyzed in the presence of water and hence easily changed to a silanol group, a silicone resin having an alkoxysilyl group is placed in an environment which facilitates hydrolysis reaction so that a silicone resin having a silanol group can be produced (the following reaction (1)). 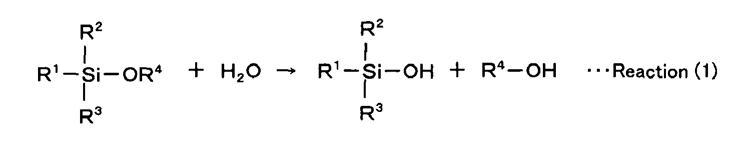 in which R¹-R³ represent organic groups, and R⁴ is alkyl having a carbon number of about 1 or 2.

The thus formed silanol group easily causes a condensation reaction with a hydroxyl group existing on the surface of the metal oxide fine particles, and forms the following oxane bond (the following reaction (2)). 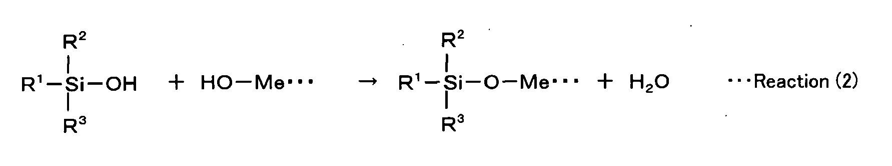 in which Me represents a metal atom.

In general, many reactive functional groups, such as a hydroxyl group, exist on the surface of the metal oxide fine particles, and therefore one metal oxide fine particle is chemically bonded with plural silicone resins to function as a cross linking point in a cross-linking high polymer material.
Accordingly, by adjusting chemical bonding between the metal oxide fine particles and the silicone resin, it is possible to produce the same kind of effect as that produced by the adjustment of the degree of cure of a thermosetting resin (the degree of cross-linking of a cross-linking high polymer material) to be able to control adhesive properties such as tack properties.

For example, a dehydration condensation reaction in the above Reaction (2) is generated only in a portion of a silicone resin that can be reacted with the metal oxide fine particles by adjustment of reaction temperature or the like, thereby enabling the resin composition to be brought into a so-called "B-stage" or the like in a curable (cross-linking) resin, such as an epoxy resin, and then the resin composition held in the "B-stage" is further subjected to thermal treatment to dehydration-condense the residual silanol group. Thus, the resin composition is brought into a "C-stage", in which the curing (cross-linking) has been completed.

By the utilization of the above reactions, it is possible to produce a thermally conductive sheet held in the "B-stage", which possess adhesiveness on the surface, and to proceed with cross-linking reaction (chemical bonding between the metal oxide fine particles and the silicone resin) by, for example, interposing this thermally conductive sheet between an electronics part and a radiator, bonding them together, and then subjecting them to thermal treatment.
That is, by the utilization of the adhesiveness, it is possible to further prevent heat release from being deteriorated due to the formation of an air layer between an electronics part and a radiator.
Since formation of an air void between the metal oxide fine particles and the silicone resin even in a microscopic view in a thermally conductive sheet, it is possible to reduce the thermal contact resistance in an interface between the silicone resin and the metal oxide fine particles.
Prevention of an air void between the metal oxide fine particles and the silicone resin effectively acts on improvement of the electric insulating property of the thermally conductive sheet, and therefore it can be expected to produce effects in terms of both the heat conductivity and the electric insulating property.

An alkoxysilyl group is preferable as a functional group originally possessed in a silicone resin for use in preparation of a resin composition because it can achieve ease of adjustment of chemical bonding, and form a strong chemical bonding.

As a silicone resin having a silanol group in a molecule thereof, it is preferable to use a condensed polymer of a multifunctional polysiloxane having an alkoxysilyl group in a molecule thereof and having a molecular weight of 200-5000 determined by calculation from a molecular formula.
By the use of such a silicone resin, for example, alternatively to the method of mixing the silicone resin and the metal oxide fine particles together, the resin composition can be prepared by mixing the polysiloxane and the metal oxide fine particles together, and then dehydration-condensing the polysiloxane. Thus, it is possible to produce the resin composition with the improved dispersion of the metal oxide fine particles by a relatively simple method.

The reaction in this case generally progresses through the following steps.

When, for example, trialkoxysilyl is reacted in the presence of water, a part or all of the alkoxysilyl groups are hydrolyzed and changed to silanol groups, and the silanol groups are dehydration-condensed with each other to thereby prepare a silicone resin having a silanol group in a molecule thereof (the following reaction (3)).

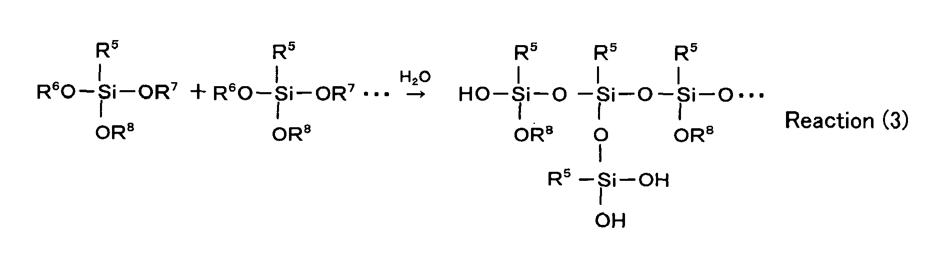

in which R⁶-R⁸ represent organic groups, and R⁵ is alkyl having a carbon number of about 1 or 2.

When metal oxide fine particles exist at this moment, a hydroxy group on the surface thereof is reacted with a silanol group of the condensed polymer silicone resin) of polysiloxane to form a chemical bond (oxane bond) (the following reaction (4)).

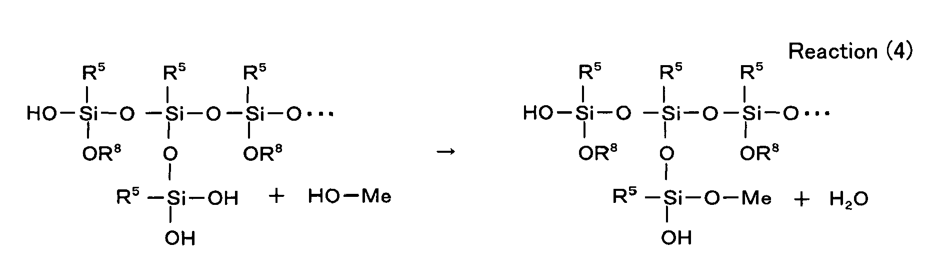

in which Me represents a metal atom.

In this embodiment, the resin component of the resin composition for use in the thermally conductive sheet is preferably formed by the above silicone resin only. However, a small amount of other resins may be added to such an extent as not to significantly deteriorate the advantageous effects of the present invention. Furthermore, a small amount of a rubber component may be added to the resin composition.
Polymer components other than the silicone resin, such as the other resins or rubber components, may be added to the resin composition, provided that the ratio of the polymer components to the total amount of the polymer components and the silicone resin is 10 % by mass or less, since the addition of such amount causes generally less influences on the electrical insulating property or thermal conductive property of the thermally conductive sheet.

No specific limitation is intended to a material of the metal oxide fine particles, as long as they can be formed by metal oxide to have a particle diameter in a range of 1-100 nm. However, the metal oxide fine particles may be any one of silicon oxide particles, aluminium oxide particles, zirconium oxide particles, titanium oxide particles, barium titanate particles, hafnium oxide particles, zinc oxide particles and iron oxide particles, because they have a fine particle diameter, have many functional groups, such as a hydroxyl group, on the surface, and are easy to be obtained.
In this embodiment, one of the above metal oxide fine particles may be selected to be contained in the resin composition, and two or more kinds of them may be selected to be contained in the resin composition.

For the metal oxide fine particles, a dispersion liquid with the metal oxide fine particles dispersed therein is prepared and size-distribution measurement by dynamic light scattering is made to this dispersion liquid to determine the median diameter (D₅₀) on the volume basis. Whereby, the particle diameter can be measured.

As inorganic components contained in the resin composition, inorganic particles other than the above metal oxide fine particles (hereinafter referred also to as "other inorganic particles") can be cited.
Examples of the other inorganic particles include silicone carbide particles, boron nitride particles, aluminium nitride particles, silicon nitride particles and gallium nitride particles having a particle diameter of about 1 µm-100 µm, which are generally used as, for example, a highly thermally conductive filler. By mixing these inorganic particles, the thermally conductive sheet can have an excellent thermal conductive property.
As the other inorganic particles, an inorganic nitride or inorganic carbide having a particle diameter of 1-100 nm may be contained in the resin composition.

On the contrary to the metal oxide fine particles, which exhibit an excellent effect on the trapping of electric charge in the thermally conductive sheet and functions as a cross linking point in the resin composition, the aforesaid inorganic particles exhibit an excellent effect mainly on improvement of the thermal conductive property in the thermally conductive sheet.
An alkoxysilyl group of the silicone resin may be able to form a chemical bond with the other inorganic particles, as well, by the same reaction as that of the metal oxide fine particles.
That is, the affinity in the interface between the aforesaid inorganic particles and the matrix resin can be improved and the thermal contact resistance between the inorganic particles and the matrix resin can be reduced by forming the thermally conductive sheet of this embodiment by the resin composition containing the silicone resin having the aforesaid alkoxysilyl group, the metal oxide fine particles and the other inorganic particles.
In addition, the thus formed thermally conductive sheet exhibits an excellent insulating property by the effect of trapping electric charge by the metal oxide fine particles.

The total content of the metal oxide fine particles and the other inorganic particles relative to the resin composition, which depends on the kind or particle diameter of them, is preferably 50 % by volume or higher and more preferably 55 % by volume or higher in general, from the view point that a thermally conductive sheet can be provided with an excellent thermal conductive property having a thermal conductivity of 10 W/mK or more.
On the other hand, the upper limit is generally 65 % by volume.
The ratio of the metal oxide fine particles to the total amount of the metal oxide fine particles and the other inorganic particles (the amount of the entire inorganic particles), which depends on the kind, etc., of the metal oxide fine particles or the other inorganic particles, is preferably in a range of 40-80 % by mass and more preferably in a range of 50-80 % by mass, in view of that, the above ranges enable a thermally conductive sheet to possess an excellent electrical insulating property, in which a breakdown voltage is 10 kV/0.2 mm or higher.

It is possible to contain various compounding additives other than the silicone resin, the metal oxide fine particles and the other inorganic particles in the resin composition for use in forming the thermally conductive sheet of the present invention to such an extent as not to deteriorate the advantageous effects of the present invention. For example, various compounding additives used in the form of a flame retardant, a weather resistant agent, a processing aid, an anti-aging agent, a pigment and the like may be added to the resin composition.

Now, the description will be made for the method of manufacturing a thermally conductive sheet by using the above resin composition.
In this embodiment, the thermally conductive sheet is prepared by carrying out a resin composition preparation step of preparing a resin composition having inorganic particles dispersed in a silicone resin and a sheet forming step of forming the resin composition formed in the resin composition preparation step into sheet, using the above materials.

In the resin composition preparation step, inorganic particles containing the metal oxide fine particles are dispersed in the silicone resin, and the resin composition having the metal oxide fine particles chemically bonded with the silicone resin is prepared.
As a specific means to achieve the above, it can be cited a method that includes causing reactions represented in the Reaction (1) and the Reaction (2) by using a silicone resin having an alkoxysilyl group in a molecule thereof, as described above.

For example, the method includes dispersing a silicone resin having an alkoxysilyl group in a molecule thereof and inorganic particles containing metal oxide fine particles in an organic solvent containing a small amount of water, thereby changing the alkoxysilyl group to a silanol group, then removing by evaporation the organic solvent and the water by heating or the like while having the silanol group dehydration-condensed with a hydroxyl group on the surface of the metal oxide fine particles, thereby forming an oxane bond.

When in use of a multifunctional polysiloxane having a molecular weight of 200-5000 and having an alkoxylsilyl group in a molecule thereof (e.g., polysiloxane having a trialkoxysilyl group at the terminal), the resin composition preparation step is carried out by, for example, carrying out the following steps.

### (Step 1-a)

A dispersion liquid (dispersion liquid A) having metal oxide fine particles dispersed in a mixed solvent of water and alcohol is prepared.

### (Step 1-b)

A dispersion liquid (dispersion liquid B) having the other inorganic particles and the multifunctional polysiloxane dispersed in alcohol or the like is prepared.

### (Step 2)

The dispersion liquid A and the dispersion liquid B are mixed together in a heated state to effect condensation polymerization of the multifunctional polysiloxane, thereby forming a silicone resin having plural silanol groups in a molecule thereof, while having the silanol groups of the silicone resin condensation-reacted with hydroxyl groups on the surface of the metal oxide fine particles.
At this moment, a dispersion liquid (dispersion liquid C) containing a resin composition having a silicone resin chemically bonded with the metal oxide fine particles can be prepared.

### (Step 3)

Alcohol, water and the like contained in the dispersion liquid C are removed by heating, thereby preparing a resin composition with these alcohol, water and the like satisfactorily removed.

In the resin composition preparation step, a resin composition having adhesiveness on the surface can be produced by adjusting the temperature condition, the reaction time and the like to make the hydroxyl groups on the surface of the metal oxide fine particles and the silanol groups of the silicone resin remain partially unreacted with each other.

Thus, a thermally conductive sheet in the form of an adhesive sheet can be formed by carrying out the sheet forming step of forming the resin composition having adhesive into sheet.
As the sheet forming step, conventional methods of forming a resin composition into sheet can be adopted, and specifically various methods such as extrusion method or casting method on a substrate film can be adopted.

Thus, the thermally conductive sheet having a surface provided with adhesive can be secured to a radiator or electronics part by being simply attached thereto, using the adhesive, and prevent an air layer from being formed between the radiator and the electronics part and thus prevent deterioration of heat releasing.
That is, the thermally conductive sheet of this embodiment can be interposed between a heat generating member or part and a heat releasing member or part without an air layer therebetween, allowing good thermal conduction.
When no adhesive is required, a material once formed into an adhesive sheet is, for example, heat pressed to make silanol groups left unreacted within the system react with hydroxyl groups on the surface of the metal oxide fine particles, and thereby form a non-adhesive sheet.

Both the resin composition preparation step and the sheet forming step can be simultaneously carried out by using an extruder or the like.
Specifically, dispersion of a resin component and an inorganic component is carried out within a cylinder of the extruder, and the mixed product, while being heated, is extruded into a sheet from a T-die or the like, thus carrying out the sheet forming step, while at the same time making the metal oxide fine particles chemically bonded with the silicone resin.

In this embodiment, the description was made for the thermally conductive sheet and the method of producing the same by, taking the above examples, no limitation is intended thereto. For example, the case, in which chemical bonding other than the dehydration condensation between a silanol group and a hydroxyl group is formed between a silicone resin and metal oxide fine particles, falls within the intended scope of the present invention.

### [EXAMPLES]

Now, the description will be further made for the present invention by taking the following Examples without intention to limit the present invention thereto.

### (Example 1)

5 g of a dispersion liquid (trade name: NZD-3007 manufactured by SUMITOMO OSAKA CEMENT CO., LTD., solid content concentration: 40 % by mass), in which zirconium oxide particles (metal oxide fine particles) having an average particle diameter of 5 nm are dispersed in water, 4 g of methanol and 4 g of methoxyethanol are placed within a container having a stirrer, a reflux condenser and a nitrogen gas introduction pipe.
Then, 1 g of boron nitride particles (trade name: HP-40 manufactured by MIZUSHIMA FERROALLOY CO., LTD.), 2 g of a multifunctional polysiloxane having an alkoxylsilyl group at the terminal (trade name: X-40-9225 manufactured by SHIN-ETSU CHEMICAL CO., LTD.) and 2 g of 2-propanol are previously mixed together for 30 minutes by a bead mill to prepare a dispersion liquid, and the dispersion liquid is added to the above content, and this intermediate is heated and stirred at 60 °C for two hours, thereby effecting condensation polymerization between the multifunctional polysiloxanes to form a silicone resin having a silanol group in a molecule thereof.
After the reaction, the reacted product is cooled to a room temperature and a solvent is distilled off therefrom to produce a viscous liquid resin composition containing zirconium oxide particles and boron nitride particles.
This resin composition is cast onto a PET film, which has been subjected to peeling-off treatment by a silicone-based agent, to have a thickness of 200 µm, dried at 100 °C for 3 minutes, thereby preparing a thermally conductive sheet in a semi-cured state (in a state in which an unreacted silanol group is left in the system: B-stage conditions).
Two pieces of this semi-cured thermally conductive sheet are overlapped to each other and pressed under the pressure of 15 tons at 100 °C for 1 minute, then heat pressed at 150°C for 1 hour, thereby making a silanol group of the silicone resin react with a hydroxyl group on the surface of the zirconium oxide particles to form a chemical bond.
The thus produced thermally conductive sheet has a film thickness of 0.2 mm and the PET film is removed therefrom to allow the sheet to be served as a sample for measuring the thermal conductivity.
A thermally conductive sheet is prepared on an electrolytic copper foil to be served as a sample for evaluating the electrical insulating property.
The aforesaid semi-cured thermally conductive sheet is stable even after the storage at 5 °C for 6 months. Two pieces of this sheet were again overlapped to each other and heat pressed in the same manner as above, and it was found that the sheet after the storage produces the same evaluation result as that for the sheet before the storage. Thus, it was found that the thermally conductive sheet of the present invention can be stored for a long time.

### (Example 2)

A thermally conductive sheet is prepared under the same conditions as those of Example 1 except that in place of boron nitride particles, aluminium oxide spherical particles (trade name: AH-32-2 manufactured by SHOWA DENKO K.K.) is used, and a sample for measuring the thermal conductivity and a sample for evaluating the electrical insulating property are prepared.

### (Example 3)

2 g of a dispersion liquid (trade name: NZD-3007 manufactured by SUMITOMO OSAKA CEMENT CO., LTD., solid content concentration: 40 % by mass), in which zirconium oxide particles (metal oxide fine particles) having an average particle diameter of 5 nm are dispersed in water, 2 g of methanol and 2 g of methoxyethanol are placed within a container having a stirrer, a reflux condenser and a nitrogen introduction pipe.
Then, a solution, in which 8 g of a multifunctional polysiloxane having an alkoxysilyl group at the terminal (trade name: KR500 manufactured by SHIN-ETSU CHEMICAL CO., LTD.) is dissolved in 8 g of 2-propanol, is added to the above content, and heated and stirred at 60 °C for 2 hours. After the reaction, the reacted product is cooled to a room temperature and a solvent is distilled off therefrom to produce a silicone resin blended product.
Then, 2 g of boron nitride particles (trade name: HP-40 manufactured by MIZUSHIMA FERROALLOY CO., LTD.) and 4 g of 2-propanol are mixed and stirred together for 30 minutes by a bead mill to prepare a dispersion liquid having the boron nitride particles dispersed therein. Then, the thus prepared liquid is added to the silicone resin blended product, and upon complete dispersion of the silicone resin blended product, a solvent is distilled off therefrom to produce a silicone resin composition in viscous liquid form containing zirconium oxide particles and boron nitride particles.
A thermally conductive sheet is prepared in the same conditions as those of Example 1 except that a silicone resin composition in viscous liquid form is used. Thus, a sample for measuring the thermal conductivity and a sample for measuring the electrical insulating property are prepared.

### (Example 4)

By the use of the same laboratory equipment as that of Example 1, a mixed liquid of 50 g of a water dispersed liquid of zirconium oxide particles (trade name: NZD-3007 manufactured by SUMITOMO OSAKA CEMENT CO., LTD., solid content concentration: 40 % by mass), 50 g of methanol and 50 g of 2-methoxyethanol are placed within a container.
Then, a solution, in which 48 g of a multifunctional polysiloxane having an alkoxysilyl group at the terminal (trade name: X-40-9225 manufactured by SHIN-ETSU CHEMICAL CO., LTD.) is dissolved in 48 g of 2-propanol, is prepared, and this solution is dropped into the aforesaid mixed liquid heated to 60°C for 30 minutes, while being stirred.
After dropping of the total amount, the heating and stirring is further kept for 2 hours to effect condensation polymerization between the multifunctional polysiloxanes, thereby forming a silicone resin having a silanol group in a molecule thereof. After the reaction, the silicone resin is cooled to a room temperature and a solvent is distilled off therefrom to produce a silicone resin blended product.
20 g of this silicone resin blended product is kneaded with a labo plastomill (trade name, manufactured by TOYO SEIKI SEISAKU-SHO, LTD.) heated to 40 °C, while at the same time the same boron nitride particles (HP-40) as those used in the foregoing Examples are added thereto. Thus, the dispersion of boron nitride particles is carried out.
At this moment, a small amount of methanol is added to appropriately improve the wettability according to needs and circumstances.
Finally, 30 g of boron nitride particles are dispersed and hence a product in paste form is produced.
The pasted product as produced is subjected to a gap-adjustment and heat pressed under the pressure of 15 tons at 100 °C for 1 minute to have a thickness of 0.2 mm, and then heat pressed at 150°C for 1 hour to react a silanol group of the silicone resin with a hydroxyl group on the surface of the zirconium oxide particles to form a chemical bond.
The thus produced thermally conductive sheet having a film thickness of 0.2 mm is served as a sample for measuring the thermal conductivity.
A sample for measuring the electrical insulating property is prepared in the same manner as above.

### (Example 5)

A thermally conductive sheet is prepared under the same conditions as those of Example 4 except that in place of boron nitride particles, 30 g of aluminium oxide spherical particles (trade name: AH-32-2 manufactured by SHOWA DENKO K.K.) is used, and a sample for measuring the thermal conductivity and a sample for evaluating the electrical insulating property are prepared.

### (Comparative Example 1)

A low hardness, high thermal conductive silicone sheet (trade name: TC-100THE manufactured by SHIN-ETSU CHEMICAL CO., LTD.), which is commercially available as a thermally conductive sheet, is served as Comparative Example 1.

### (Comparative Example 2)

An acrylic-based thermally conductive sheet (trade name: No. 5590H manufactured by SUMITOMO 3M LTD.), which is commercially available as a thermally conductive sheet, is served as Comparative Example 2.

### (Comparative Example 3)

2 g of silicone elastomer (trade name: WACKER SilGel 612 A, B manufactured by WACKER ASAHIKASEI SILICONE CO. LTD.) is dissolved into 10 g of 2-butanone to prepare a solution.
Then, 6.7 g of organo silica gel (trade name: MEK-ST manufactured by NISSAN CHEMICAL INDUSTRIES, LTD., particle diameter: 10-20 nm, solid content concentration: 30 % by mass) is subjected to silane coupling treatment and the aforesaid solution is added thereto.
Furthermore, 1 g of boron nitride particles (trade name: HP-40 manufactured by MIZUSHIMA FERROALLOY CO., LTD.) is added thereto, and dispersed for 30 minutes by a bead mill to prepare a dispersion liquid. Then, a solvent is distilled off from the dispersion liquid to produce a resin composition containing metal oxide fine particles subjected to silane coupling treatment.
This resin composition is coated onto a glass plate to have a thickness of 0.2 mm in the dried state, and then dried at 100 °C for 1 hour and subsequently at 150 °C for 1 hour to produce a thermally conductive sheet containing metal oxide fine particles which are not chemically bonded with a silicone resin (silicone elastomer) (i.e., which are subjected to silanol coupling treatment, only).

### (Measurement of Thermal Conductivity)

The thermally conductivity of each of the samples for measuring the thermal conductivity of the Examples and the Comparative Examples are measured.
The thermal conductivity is calculated by obtaining the thermal diffusion rate by an "Ai-Phase Mobile (trade name manufactured by AI-PHASE CO. LTD., then measuring the thermal capacity per unit volume of a thermally conductive sheet by the measurement using a differential scanning calorimetry (DSC), and then multiplying the measured value into the aforesaid thermal diffusion rate.
The results are shown in Table 1.

### (Measurement of Breakdown Voltage)

The breakdown voltages of the samples for evaluating the electrical insulating property of the Examples and the Comparative Examples are measured according to JIS-C2110.
The results are shown in Table 1.

**Table 1**

| | Ex. 1 | Ex. 2 | Ex. 3 | Ex. 4 | Ex. 5 | Comp Ex. 1 | Comp Ex. 2 | Comp Ex. 3 |
|---|---|---|---|---|---|---|---|---|
| Thickness | 0.2 | 0.2 | 0.2 | 0.2 | 0.2 | 0.2 | 0.2 | 0.2 |
| (mm) | | | | | | | | |
| Used resin | Silicone resin | Silicone resin | Silicone resin | Silicone resin | Silicone resin | Silicone resin | Acrylic resin | Silicone resin |
| Thermal conductivity (W/m K) | 10.5 | 4.6 | 10.1 | 10.7 | 5.2 | 2.5 | 2.8 | 2.6 |
| Breakdown voltage (kV) | 11.5 | 5.6 | 11.2 | 11.8 | 6.3 | 4.8 | 11.0 | 2.8 |

In this Table, a high electrical insulating property required for a thermally conductive sheet is exhibited, while an excellent heat conductivity is exhibited in the Examples.
On the other hand, the thermal conductivity in any of the Comparative Examples is insufficient.
In addition, in the Comparative Example 1, the electrical insulating property is also poor.
That is, according to the present invention, it is possible to improve the electrical insulating property while not deteriorating the thermal conductivity required for a thermally conductive sheet.

This specification is by no means intended to restrict the present invention to the preferred embodiments set forth therein. Various modifications to the thermally conductive sheet and the method of producing the same, as described herein, may be made by those skilled in the art without departing from the spirit and scope of the present invention as defined in the appended claims.

## Claims

1. A thermally conductive sheet comprising a resin composition that contains a silicone-based resin and inorganic particles, wherein the inorganic particles comprise metal oxide particles that have a particle diameter of 1-100 nm and are dispersed in the silicone-based resin while being chemically bonded to the silicone-based resin.

2. The thermally conductive sheet according to claim 1, wherein the silicone-based resin has a silanol group in a molecule thereof and mixed with the metal oxide particles, and a hydroxyl group on the surface of the metal oxide particles is dehydration-condensed with the silanol group to form the chemical bond.

3. The thermally conductive sheet according to claim 2, wherein the silicone-based resin having the silanol group in a molecule thereof is a condensed polymer of a multifunctional polysiloxane having an alkoxysilyl group in a molecule thereof and having a molecular weight of 200-5000 and thereby reacting the silanol group with the hydroxy group.

4. The thermally conductive sheet according to any one of claims 1-3, wherein the metal oxide particles are at least one kind selected from the group consisting of silicon oxide particles, aluminium oxide particles, zirconium oxide particles, titanium oxide particles, barium titanate particles, hafnium oxide particles, zinc oxide particles and iron oxide particles.

5. The thermally conductive sheet according to any one of claims 1-4, wherein the resin composition further contains inorganic particles other than the metal oxide particles, and the inorganic particles are at least one kind selected from the group consisting of silicone carbide particles, boron nitride particles, aluminium nitride particles, silicon nitride particles and gallium nitride particles.

6. The thermally conductive sheet according to claim 5, wherein the inorganic particles are boron nitride particles, and the metal oxide particles are zirconium oxide particles.

7. The thermally conductive sheet according to any one of claims 5-6, wherein the inorganic particles and the metal oxide particles are contained in the resin composition in a range of 50-65 % by volume, and the ratio of the metal oxide particles to the total amount of the inorganic particles and the metal oxide particles is in a range of 50-80 % by mass.
